# DEMANDE DE BREVET EUROPEEN

(11) **EP 4 779 766 A1**
(43) Date de publication de la demande: **22.07.2026**
(21) Numéro de dépôt: 25222847.3
(22) Date de dépôt: 12.12.2025
(51) Int. Cl.: H01M 50/105, H01M 50/202, H01M 50/211, H01M 50/249, H01M 50/291, H01M 50/218, H01M 50/227, H01M 50/233, H01M 50/224, H01M 50/264

(54) **CADRE POUR CELLULE DE BATTERIE ET BATTERIE INCORPORANT UN TEL CADRE**

(30) Priorité: 15.01.2025 FR 2500424
(71) Demandeur: Safran Electrical & Power, 31702 Blagnac (FR)
(72) Inventeur: CZECH, Philippe, 77550 Moissy Cramayel (FR); BIZET, Hervé, 77550 Moissy Cramayel (FR)
(74) Mandataire: Casalonga

(57) **Abrégé**

Cadre pour cellule de batterie, comprenant une bordure périphérique (6) destinée à entourer au moins partiellement la cellule (2) et comprenant un ensemble de parois intérieures (12) délimitant une ouverture centrale (5) destinée à recevoir au moins partiellement la cellule (2), et un ensemble de parois extérieures (13) positionné à distance de l'ensemble de parois intérieures (12), l'ouverture centrale (5), l'ensemble de parois intérieures (12) et l'ensemble de parois extérieures (13) s'étendant dans un plan commun, chaque paroi intérieure de l'ensemble de parois intérieures (12) comprenant une première face interne (12a) positionnée en regard de l'ouverture centrale (5) et une première face externe (12b) opposée à la première face interne (12a), chaque paroi extérieure de l'ensemble de parois extérieures (13) comprenant une deuxième face interne (13a) positionnée en regard de l'ensemble de parois intérieures (12) et une deuxième face externe (13b) opposée à la deuxième face interne (13a) et positionnée vers l'extérieur du cadre (3), l'ensemble de parois extérieures (13) et l'ensemble de parois intérieures (12) étant reliés localement par des jonctions (14) pour former une pluralité d'espaces vides (15) s'étendant entre l'ensemble de parois intérieures (12) et l'ensemble de parois extérieures (13) dans ledit plan commun à l'ouverture centrale (5), à l'ensemble de parois intérieures (12) et à l'ensemble de parois extérieures (13).

## Description

### Domaine technique

La présente invention concerne, de manière générale, la gestion thermique des cellules d'une batterie électrique, notamment dans le domaine de l'aéronautique, et plus précisément la protection des cellules de batterie contre l'emballement thermique.

En particulier, l'invention concerne un cadre de batterie, un module de batterie comprenant un tel cadre, une batterie comprenant un tel module, ainsi qu'un aéronef comprenant une telle batterie.

### Techniques antérieures

Le changement climatique est une préoccupation majeure pour de nombreux organes législatifs et de régulation à travers le monde. En effet, diverses restrictions sur les émissions de carbone ont été, sont ou seront adoptées par divers Etats. En particulier, une norme ambitieuse s'applique à la fois aux nouveaux types d'avions mais aussi ceux actuellement en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant toutes les phases de conception et de développement pour obtenir des composants et des produits aéronautiques moins énergivores, plus respectueux de l'environnement et dont l'intégration et l'utilisation dans l'aviation civile ont des impacts environnementaux modérés dans un but d'amélioration de l'efficacité énergétique des avions. Par voie de conséquence, la Déposante travaille en permanence à la réduction de son impact climatique par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent notamment sur le développement de l'emploi des technologies électriques pour assurer la propulsion.

Dans le domaine de la propulsion électrique des aéronefs, une batterie destinée au stockage de l'énergie électrique est classiquement formée par un ensemble de packs individuels comprenant chacun des modules constitués d'accumulateurs appelés couramment cellules et configurés en combinaison en série et/ou en parallèle afin d'atteindre la tension électrique et la capacité électrique voulues.

En fonction de l'application de la batterie, les cellules présentent soit une enveloppe externe rigide, soit une enveloppe externe souple.

Classiquement, dans l'aéronautique, la batterie est formée par un assemblage de cellules en sachet souple, usuellement désignées par les termes anglo-saxons « pouch cells », dont le faible poids de leur enveloppe externe les rend particulièrement adaptées à cette application.

Au-delà d'un seuil de température dit « d'emballement thermique », il peut se produire un amorçage de réactions chimiques internes exothermiques au sein de la cellule. Lorsque celle-ci n'est plus capable d'évacuer suffisamment de chaleur, sa température augmente jusqu'à destruction. Ce phénomène est usuellement désigné sous l'appellation d'emballement thermique.

Autrement dit, un emballement thermique se produit dans une batterie lorsque l'énergie dégagée par les réactions exothermiques qui surviennent à l'intérieur de celle-ci excède la capacité à la dissiper à l'extérieur.

Cet emballement peut être suivi d'une génération de gaz et d'explosion et/ou de feu, qui risque de propager la réaction aux autres cellules de la batterie.

Dans le cadre des cellules pouch, il est connu d'intégrer un cadre rigide autour de chaque cellule souple de l'assemblage de façon à protéger leur intégrité mécanique et les empiler plus facilement.

Il est également connu de former le cadre en résine époxy dont les propriétés d'isolation thermique permettent de limiter le transfert de chaleur vers les cellules voisines.

Toutefois, la réaction provoquée par l'emballement est si violente qu'un tel cadre ne suffit pas à contenir l'emballement thermique d'une cellule, et peut être détruit. Lorsque le cadre est percé, il ne retient plus les émanations et jets de matières en fusion qui endommagent les cellules environnantes.

Il existe donc un besoin d'améliorer l'isolation thermique de chacune des cellules, notamment des cellules de type « pouch » en sachet, au sein d'un assemblage de cellules de batterie.

### Exposé de l'invention

La présente invention a donc pour but de pallier les inconvénients précités et de fournir un cadre pour cellule de batterie électrique dont la fonction d'isolation thermique est optimisée pour préserver les cellules voisines lors d'un événement d'emballement thermique de la cellule qu'il encadre.

Il est donc proposé un cadre pour cellule de batterie, comprenant une bordure périphérique destinée à entourer au moins partiellement la cellule et comprenant un ensemble de parois intérieures délimitant une ouverture centrale destinée à recevoir au moins partiellement la cellule, et un ensemble de parois extérieures positionné à distance de l'ensemble de parois intérieures, l'ouverture centrale, l'ensemble de parois intérieures et l'ensemble de parois extérieures s'étendant dans un plan commun, chaque paroi intérieure de l'ensemble de parois intérieures comprenant une première face interne positionnée en regard de l'ouverture centrale et une première face externe opposée à la première face interne, chaque paroi extérieure de l'ensemble de parois extérieures comprenant une deuxième face interne positionnée en regard de l'ensemble de parois intérieures et une deuxième face externe opposée à la deuxième face interne et positionnée vers l'extérieur du cadre, l'ensemble de parois extérieures et l'ensemble de parois intérieures étant reliés localement par des jonctions pour former une pluralité d'espaces vides s'étendant entre l'ensemble de parois intérieures et l'ensemble de parois extérieures dans ledit plan commun à l'ouverture centrale, à l'ensemble de parois intérieures et à l'ensemble de parois extérieures.

De préférence, le matériau du cadre possède une conductivité thermique inférieure ou égale à 1 W·m⁻¹·K⁻¹, tel qu'une résine époxy.

Avantageusement, les deuxièmes faces internes des parois extérieures de l'ensemble de parois extérieures possèdent une forme convexe, de préférence une forme cylindrique convexe.

Dans un mode de réalisation, le cadre peut comprendre des première et deuxième faces latérales opposées, les espaces vides de la bordure périphérique débouchant sur les première et deuxième faces latérales du cadre.

De préférence, la bordure périphérique comprend au moins un premier côté latéral et un deuxième côté latéral opposé au premier côté latéral selon un axe transversal du cadre, au moins l'un parmi le premier côté latéral et le deuxième côté latéral comprenant au moins un espace vide, de préférence le premier côté latéral et le deuxième côté latéral comprenant chacun au moins un espace vide.

De préférence, la bordure périphérique comprend au moins un côté supérieur et un côté inférieur opposé au côté supérieur selon un axe longitudinal du cadre, au moins l'un parmi le côté supérieur et le côté inférieur comprenant au moins un espace vide, de préférence le côté supérieur et le côté inférieur comprenant chacun au moins un espace vide.

De préférence, la bordure périphérique du cadre est monobloc, plus préférentiellement le cadre est monobloc.

L'invention concerne également un module de batterie comprenant au moins un cadre comme précédemment décrit.

De préférence, le module de batterie comporte une pluralité de cadres pour cellule empilés selon un axe d'empilement E, au moins l'un de ladite pluralité de cadres comportant au moins un cadre comme décrit précédemment, de préférence la totalité des cadres de ladite pluralité de cadres du module de batterie étant un cadre comme précédemment décrit.

Dans un mode de réalisation, au moins un espace vide du cadre peut être vide.

Dans un autre mode de réalisation, le module de batterie peut comprendre un élément en mousse isolante thermique positionné dans au moins un espace vide de la bordure périphérique dudit cadre, de préférence l'élément en mousse isolante thermique est une mousse métallique.

L'invention concerne également une batterie comprenant au moins un module comme précédemment décrit.

L'invention se rapporte aussi à un aéronef comprenant au moins une batterie électrique comme précédemment décrite.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
Fig 1 illustre un module de batterie selon un mode de réalisation de l'invention.
Fig 2 est une vue éclatée d'un ensemble comprenant une mousse isolante thermique, un cadre et une cellule du module de batterie illustré à la figure 1.
Fig 3 représente un cadre du module de batterie illustré à la figure 1.

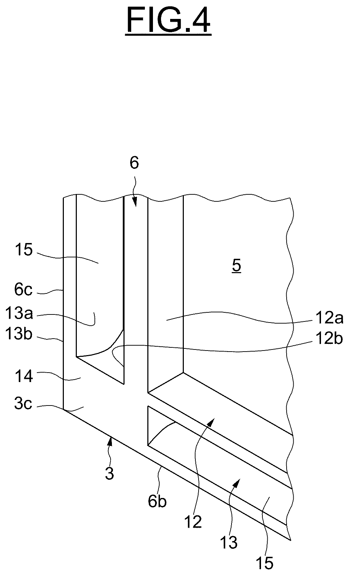

Fig 4 est une vue détaillée d'un premier coin inférieur du cadre illustré à la figure 2.

Dans ce qui va suivre, l'expression «au moins un » utilisée dans la présente description est équivalente à l'expression « un ou plusieurs».

### Exposé détaillé d'au moins un mode de réalisation

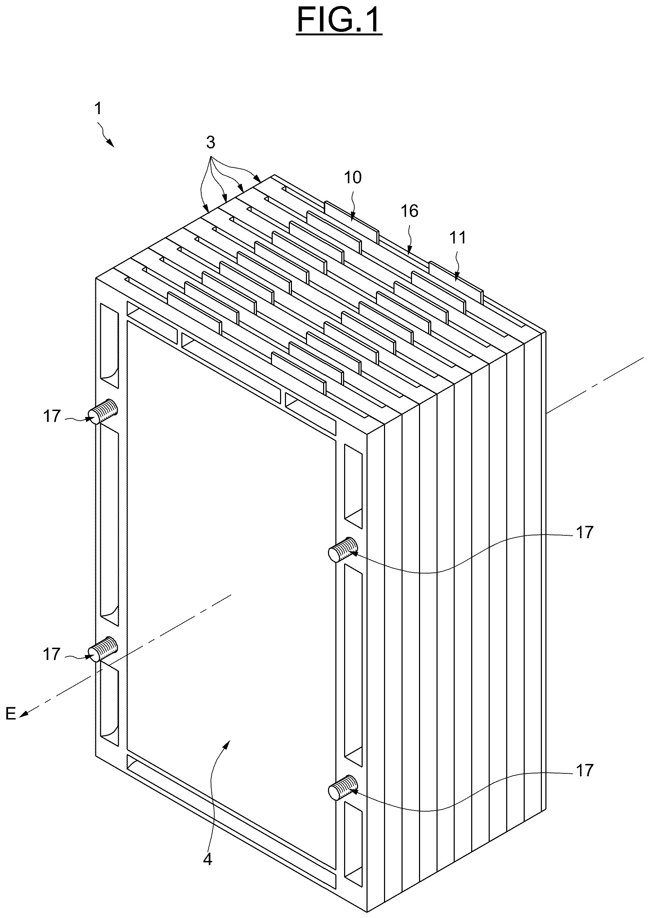

La figure 1 illustre un module 1 de batterie selon un mode de réalisation de l'invention, comprenant un assemblage d'une pluralité de cellules 2.

Dans le mode de réalisation décrit, le module 1 de batterie est destiné à être embarqué à bord d'un aéronef. On notera toutefois que l'invention ne se limite pas à une utilisation dans le domaine aéronautique et peut être appliquée de manière générale à d'autres domaines et environnements, et notamment à tout dispositif ou véhicule nécessitant un stockage d'énergie électrique.

Selon un exemple, le module 1 peut être un module de batterie dont le fonctionnement repose sur la technologie lithium ion ou lithium métal.

La batterie peut comprendre un ou plusieurs modules 1 de batterie.

Le module 1 de batterie comprend un empilement d'une pluralité de cellules 2 et d'une pluralité de cadres 3 empilés selon un axe longitudinal d'empilement E.

Avantageusement, les cellules 2 sont des accumulateurs de type sachet souple, dite cellule pouch.

Dans l'exemple illustré, l'empilement comprend, en outre, une pluralité de mousses d'isolation thermique 4. Les couches de mousse d'isolation thermique 4 sont par exemple intercalées dans la structure du cadre, en appui contre les cellules 2.

Une couche de mousse d'isolation thermique 4 intercalée entre deux cellules 2 adjacentes possède une fonction d'isolation thermique entre lesdites cellules 2 adjacentes et permet, en outre, d'absorber les variations de volume de chaque cellule 2 en fonctionnement contre laquelle elle est positionnée, notamment d'absorber les variations de largeur dans la direction de l'axe d'empilement E.

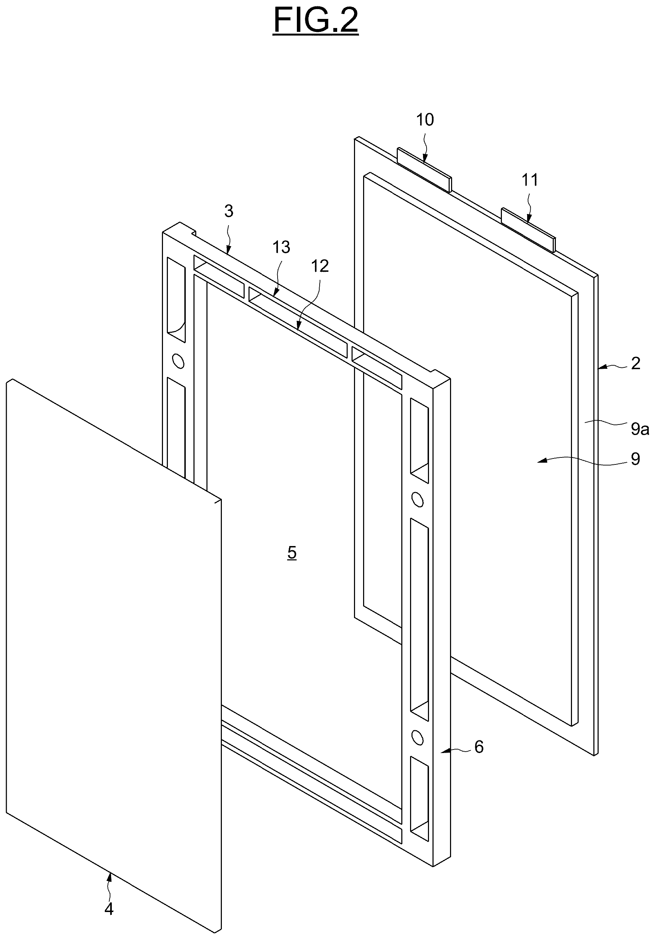

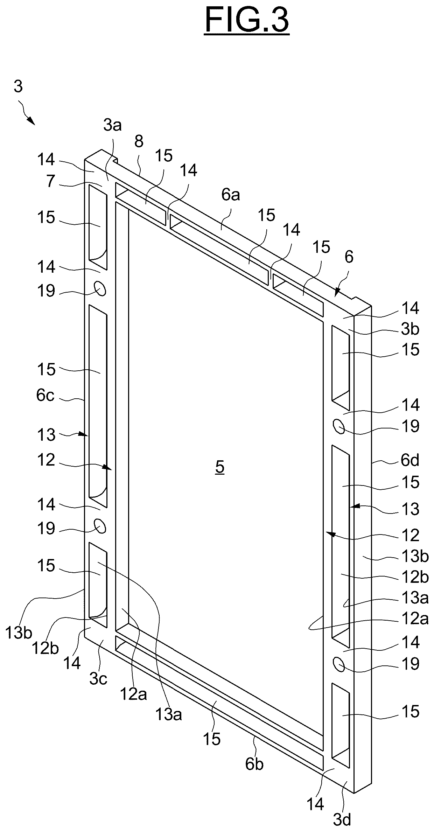

En référence aux figures 2 et 3, chaque cadre 3 comprend une ouverture centrale 5 destinée à recevoir au moins partiellement l'une des cellules 2 du module 1 de batterie, et une bordure périphérique 6 délimitant l'ouverture centrale 5 et destinée à entourer au moins partiellement la cellule 2 à laquelle le cadre 3 est associé. De manière préférentielle, chaque cadre 3 reçoit et entoure une unique cellule 3.

Chaque cadre 3 comprend une première face latérale 7 et une deuxième face latérale 8 axialement opposée à la première face latérale 7 par rapport à l'axe d'empilement E.

Avantageusement, la bordure périphérique 6 du cadre 3 peut comprendre au moins quatre côtés, dont un côté supérieur 6a, un côté inférieur 6b opposé au côté supérieur 6a selon un axe longitudinal du cadre 3 perpendiculaire à l'axe d'empilement E, un premier côté latéral 6c et un deuxième côté latéral 6d opposé au premier côté latéral 6c selon un axe transversal du cadre 3 perpendiculaire à l'axe longitudinal du cadre 3.

Dans l'exemple illustré, la bordure périphérique 6 du cadre 3 illustré est de forme rectangulaire et les quatre côtés sont raccordés par quatre coins dont un coin premier supérieur 3a, un deuxième coin supérieur 3b, un premier coin inférieur 3c, et un deuxième coin inférieur 3d.

De plus, chaque cellule 2 comprend un corps 9, formé par une enveloppe externe et comportant un pourtour périphérique 9a, et deux bornes électriques 10 et 11.

Lorsque les cellules 2, les cadres 3 et les mousses d'isolation thermique 4 sont empilées pour former le module 1 de batterie, la deuxième face latérale 8 du cadre 3 s'étend au moins partiellement contre le pourtour périphérique 9a d'une cellule 2 et l'englobe, et la première face latérale 7 s'étend au moins partiellement contre le pourtour périphérique 9a d'une cellule voisine. De plus, une mousse d'isolation thermique 4 s'étend dans l'ouverture centrale 5 de chaque cadre 3 de façon à être plaquée contre le corps 9 des deux cellules 2 en contact avec le cadre 3.

Dans l'exemple illustré, les dimensions du cadre 3 sont supérieures aux dimensions de la cellule 2. De préférence, la première face latérale 7 et la deuxième face latérale 8 du cadre 3 s'étendent, respectivement, au moins partiellement contre la deuxième face latérale 8 et la première face latérale 7 des deux cadres adjacents.

Dans un mode de réalisation, la deuxième face latérale 8 du cadre 3 peut comprendre des rebords sur lesquels la mousse d'isolation thermique 4 vient en appui. Les rebords peuvent avantageusement délimiter un logement dans lequel vient se loger la cellule 2.

La bordure périphérique 6 de chaque cadre 3 comprend un ensemble de parois intérieures 12 connectées entre elles, l'ensemble de parois intérieures 12 délimitant l'ouverture centrale 5.

De plus, la bordure périphérique 6 de chaque cadre 3 comprend un ensemble de parois extérieures 13 connectées entre elles, l'ensemble de parois extérieures 13 s'étendant autour de l'ensemble de parois intérieures 12. Dans l'exemple illustré, l'ensemble de parois intérieures 12 comprend quatre parois intérieures connectées entre elles pour former un premier rectangle, et l'ensemble de parois extérieures 13 comprend quatre parois extérieures connectées entre elles à distance de des quatre parois intérieures pour former un deuxième rectangle de dimensions supérieures au premier rectangle.

L'ouverture centrale 5, l'ensemble de parois intérieures 12 et l'ensemble de parois extérieures 13 s'étendent dans un plan commun perpendiculaire à l'axe d'empilement E.

Dans l'exemple illustré, chacun parmi le côté supérieur 6a, le côté inférieur 6b, le premier côté latéral 6c et le deuxième côté latéral 6d de la bordure périphérique 6 de forme rectangulaire est formé par une paroi extérieure de l'ensemble de parois extérieures 13 et par une paroi intérieure de l'ensemble de parois intérieures 12.

Chaque paroi intérieure de l'ensemble de parois intérieures 12 comprend une première face interne 12a positionnée en regard de l'ouverture centrale 5, et une première face externe 12b opposée à la première face interne 12a.

Chaque paroi extérieure de l'ensemble de parois extérieures 13 comprend une deuxième face interne 13a positionnée en regard de l'ensemble de parois intérieures, et notamment en regard de la première face externe 12b des parois intérieures de l'ensemble de parois intérieures 12. Chaque paroi extérieure de l'ensemble de parois extérieures 13 comprend, en outre, une deuxième face externe 13b opposée à la deuxième face interne 13a et positionnée vers l'extérieur du cadre 3.

L'ensemble de parois intérieures 12 et l'ensemble de parois extérieures 13 sont reliés localement par des jonctions 14. La structure à double paroi formant la bordure périphérique 6 comprend ainsi une pluralité d'espaces vides 15.

Les espaces vides 15 s'étendent entre l'ensemble de parois intérieures 12 et l'ensemble de parois extérieures 13 dans le plan du cadre 3 perpendiculaire à l'axe d'empilement E de la pluralité de cadres 3 du module de batterie.

Comme cela est illustré, les jonctions 14 peuvent, avantageusement, avoir une forme parallélépipédique. De préférence, chaque jonction 14 s'étend depuis la deuxième face interne 13a de l'une des parois extérieures de l'ensemble de parois extérieures 13 jusqu'à la première face externe 12b de l'une des parois intérieures de l'ensemble de parois intérieures 12 positionnée en vis-à-vis, la jonction 14 s'étendant perpendiculairement au plan passant par ladite paroi extérieure et ladite paroi intérieure auxquelles ladite jonction 14 est raccordée.

Les cellules 2 et les cadres 3 du module 1 de batterie sont empilées de sorte que lors d'un événement d'emballement thermique de l'une des cellules 2, un dégazage de la cellule 2 concernée est susceptible de se produire sur le pourtour périphérique 9a de la cellule 2.

Une telle structure de cadre 3 permet de limiter la propagation de l'emballement thermique vers les cellules 2 voisines.

En effet, l'air possède une conductivité thermique d'environ 0,025 W·m⁻¹·K⁻¹, de sorte que les poches d'air formées par les espaces vides 15 agissent comme un isolant thermique au sein de la bordure périphérique 6 du cadre 3.

Un tel cadre 3 permet de porter la fonction d'isolation thermique d'une cellule 2 de son environnement pour prévenir ou tout du moins ralentir la propagation d'un emballement thermique vers les cellules 2 voisines de manière optimisée.

L'énergie associée à l'emballement thermique est au moins partiellement absorbée par la bordure périphérique 6 du cadre 3 avant que celle-ci n'atteigne et n'endommage les autres cellules 2.

En plus de garantir un niveau d'isolation thermique optimisé, les espaces vides 15 ont pour avantage de ne pas générer de masse supplémentaire au cadre 3.

De préférence et comme cela est illustré, chacun des espaces vides 15 débouchent sur les première et deuxième faces latérales 7, 8 du cadre 3.

De préférence, la bordure périphérique 6 du cadre 3 est monobloc, l'ensemble de parois intérieures 12, l'ensemble de parois extérieures 13 et les jonctions 14 formant une unique structure.

Plus préférentiellement, le cadre 3 dans son ensemble est monobloc. Un tel cadre 3 peut être aisément fabriqué par fabrication additive ou par usinage.

Le côté supérieur 6a et le côté inférieur 6b de la bordure périphérique 6 comprennent, de préférence, chacun au moins un espace vide 15.

De plus, le premier côté latéral 6c et le deuxième côté latéral 6d de la bordure périphérique 6 comprennent, de préférence, chacun au moins un espace vide 15.

De préférence, chacun des côtés de la bordure périphérique 6 du cadre 3 comporte au moins un espace vide 15.

Plus préférentiellement, la bordure périphérique 6 comprend majoritairement des espaces vides 15 de manière à maximiser l'isolation thermique formée par l'air entre les parois intérieures et les parois extérieures du cadre 3.

En d'autres termes, la bordure périphérique 6 comprend, de préférence, plus d'espaces vides 15 que de jonctions 14 entre l'ensemble de parois intérieures 12 et l'ensemble de parois extérieures 13.

Dans l'exemple illustré, le côté supérieur 6a de la bordure périphérique 6 comprend trois espaces vides 15 séparés par deux jonctions 14, s'étendant depuis le premier coin supérieur 3a jusqu'au deuxième coin supérieur 3b. Le côté inférieur 6b comprend un espace vide 15 s'étendant depuis le premier coin inférieur 3c jusqu'au deuxième coin inférieur 3d. Le premier côté latéral 6c comprend trois espaces vides 15 séparés par deux jonctions 14, s'étendant depuis le premier coin inférieur 3c jusqu'au premier coin supérieur 3a. De plus, le deuxième côté latéral 6d comprend trois espaces vides 15 séparés par deux jonctions 14, s'étendant depuis le deuxième coin inférieur 3d jusqu'au deuxième coin supérieur 3b.

De préférence, le matériau du cadre possède une conductivité thermique inférieure ou égale à 1 W·m⁻¹·K⁻¹.

Selon un exemple de réalisation, le cadre 3 peut être formé par une résine époxy, par exemple un stratifié comprenant des couches de tissu de verre et de résine époxy, tel qu'un tissu époxy FR5.

Avantageusement, la deuxième face interne 13a des parois extérieures de l'ensemble de parois extérieures 13 de la bordure périphérique 6 possède une forme arrondie, de préférence convexe.

Plus préférentiellement, la deuxième face interne 13a des parois extérieures de l'ensemble de parois extérieures 13 possède une forme cylindrique convexe.

La surface de la deuxième face interne 13a des parois extérieures de l'ensemble de parois extérieures 13 est bombée en regard de la première face externe 12b des parois intérieures de l'ensemble de parois intérieures 12.

Une telle forme de la deuxième face interne 13a des parois extérieures de l'ensemble de parois extérieures 13 permet d'atténuer par diffraction l'onde de choc issue de l'explosion de l'une des cellules 2 du module 1 de batterie lors d'un événement d'emballement thermique.

Ceci permet en outre d'améliorer la fonction de tenue mécanique du cadre 3 en apportant une bonne rigidité en flexion tout en limitant l'apport de masse comparativement à un épaississement constant des parois extérieures.

Dans un mode de réalisation, les espaces vides 15 de la bordure périphérique 6 du cadre 3 peuvent être laissés vides.

En variante, un élément en mousse isolante thermique, de préférence une mousse métallique, peut être positionné dans au moins un espace vide 15 du cadre 3.

Lorsque les cadres 3 sont empilés pour former un module 1 de batterie, chacun des espaces vides 15 de la bordure périphérique 6 de l'un des cadres 3 débouche sur l'espace vide 15 analogue de la bordure périphérique 6 des cadres 3 adjacents.

Ainsi, selon une caractéristique, un unique élément de mousse isolante thermique peut combler chacun des espaces vides d'une pluralité de cadres 3 empilées d'un module 1 de batterie.

Le nombre d'éléments de mousse isolante thermique au sein d'un module 1 de batterie est alors égal au nombre d'espaces vides 15 d'un cadre 3.

Avantageusement, l'élément en mousse isolante thermique peut être une mousse enrobée.

L'air présent dans les pores de l'élément en mousse isolante thermique forme une poche d'air dans chaque espace vide 15 de la bordure périphérique 6 du cadre 3, optimisant la fonction d'isolation thermique entre cellules 2 obtenue par les cadres 3 du module 1 de batterie qui les contient.

De préférence, le module 1 de batterie comprend des moyens de maintien de l'empilement de cellules 2 et de cadres 3.

Dans le mode de réalisation illustré, les moyens de maintien comprennent au moins une plaque de compression 16 disposée au moins à l'une des extrémités de l'empilement du module 1 de batterie.

Dans l'exemple illustré, les moyens de maintien comprennent une unique plaque de compression 16 disposée à l'une des extrémités de l'empilement du module 1 de batterie.

En variante, le module 1 de batterie peut comprendre deux plaques de compression 16 opposées, disposées de part et d'autre de l'empilement, aux deux extrémités de l'empilement.

Avantageusement, la pluralité de cadres 3 et la plaque de compression 16 sont reliés par au moins un tirant 17, de préférence par plusieurs tirants.

De préférence, les tirants 17 sont installés selon une direction parallèle à l'axe longitudinal de l'empilement E.

Dans l'exemple illustré, le module 1 de batterie comprend quatre tirants 17, traversant quatre des jonctions 14 de la bordure périphérique 6 de chaque cadre 3 du module 1.

A cet égard, les moyens de maintien incluent quatre orifices 19 pour l'insertion des tirants 17 à travers le cadre 3, de préférence centraux, par exemple des orifices circulaires.

## Revendications

1. Cadre pour cellule de batterie, comprenant une bordure périphérique (6) destinée à entourer au moins partiellement la cellule (2) et comprenant un ensemble de parois intérieures (12) délimitant une ouverture centrale (5) destinée à recevoir au moins partiellement la cellule (2), et un ensemble de parois extérieures (13) positionné à distance de l'ensemble de parois intérieures (12), l'ouverture centrale (5), l'ensemble de parois intérieures (12) et l'ensemble de parois extérieures (13) s'étendant dans un plan commun,
chaque paroi intérieure de l'ensemble de parois intérieures (12) comprenant une première face interne (12a) positionnée en regard de l'ouverture centrale (5) et une première face externe (12b) opposée à la première face interne (12a), chaque paroi extérieure de l'ensemble de parois extérieures (13) comprenant une deuxième face interne (13a) positionnée en regard de l'ensemble de parois intérieures (12) et une deuxième face externe (13b) opposée à la deuxième face interne (13a) et positionnée vers l'extérieur du cadre (3),
l'ensemble de parois extérieures (13) et l'ensemble de parois intérieures (12) étant reliés localement par des jonctions (14) pour former une pluralité d'espaces vides (15) s'étendant entre l'ensemble de parois intérieures (12) et l'ensemble de parois extérieures (13) dans ledit plan commun à l'ouverture centrale (5), à l'ensemble de parois intérieures (12) et à l'ensemble de parois extérieures (13), et
les deuxièmes faces internes (13a) des parois extérieures de l'ensemble de parois extérieures (13) possédant une forme convexe, de préférence une forme cylindrique convexe.

2. Cadre selon la revendication 1, dans lequel le matériau du cadre (3) possède une conductivité thermique inférieure ou égale à 1 W·m⁻¹·K⁻¹, tel qu'une résine époxy.

3. Cadre selon la revendication 1 ou 2, dans lequel le cadre (3) comprend des première et deuxième faces latérales (7, 8) opposées, les espaces vides (15) de la bordure périphérique (6) débouchant sur les première et deuxième faces latérales (7, 8) du cadre (3).

4. Cadre selon l'une quelconque des revendications précédentes, dans lequel la bordure périphérique (6) comprend au moins un premier côté latéral (6c) et un deuxième côté latéral (6d) opposé au premier côté latéral (6c) selon un axe transversal du cadre (3), au moins l'un parmi le premier côté latéral (6c) et le deuxième côté latéral (6d) comprenant au moins un espace vide (15), de préférence le premier côté latéral (6c) et le deuxième côté latéral (6d) comprenant chacun au moins un espace vide (15).

5. Cadre selon l'une quelconque des revendications précédentes, dans lequel la bordure périphérique (6) comprend au moins un côté supérieur (6a) et un côté inférieur (6b) opposé au côté supérieur (6a) selon un axe longitudinal du cadre (3), au moins l'un parmi le côté supérieur (6a) et le côté inférieur (6b) comprenant au moins un espace vide (15), de préférence le côté supérieur (6a) et le côté inférieur (6b) comprenant chacun au moins un espace vide.

6. Module de batterie comprenant au moins un cadre (3) selon l'une quelconque des revendications précédentes.

7. Module de batterie selon la revendication 6, comprenant un élément en mousse isolante thermique positionné dans au moins l'un des espaces vides (15) de la bordure périphérique (6) du cadre (3), de préférence l'élément en mousse isolante thermique est une mousse métallique.

8. Batterie électrique comprenant au moins un module (1) selon l'une quelconque des revendications 6 et 7.

9. Aéronef comprenant au moins une batterie électrique selon la revendication 8.
